# EUROPEAN PATENT APPLICATION

(11) **EP 2 810 859 A1**
(43) Date of publication of application: **10.12.2014**
(21) Application number: 14167860.7
(22) Date of filing: 12.05.2014
(51) Int. Cl.: B62J 99/00, B62K 11/10, B62M 6/65

(54) **Storage structure of portable information terminal for motorcycle vehicle**

(30) Priority: 07.06.2013 JP 2013120413
(71) Applicant: Honda Motor Co., Ltd., Tokyo 107-8556 (JP)
(72) Inventor: Hiramaru, Masayuki, Saitama, 351-0193 (JP); Suzuki, Tomohiro, Saitama, 351-0193 (JP)
(74) Representative: Herzog, Markus

(57) **Abstract**

**Object**

To dispose a portable information terminal in the periphery of a meter in a storage structure of a portable information terminal for a saddleride type vehicle.

**Constitution**

In a storage structure of a portable information terminal for a saddle-ride type vehicle including a head pipe, a front cover that covers the head pipe, a meter panel 22 formed on the upper face of the front cover with the meter being disposed thereon, a steering shaft 14 journaled to the head pipe, a handlebar 15 attached to the upper end of the steering shaft 14 through an insertion port section 40 arranged in the meter panel 22, and a handlebar cover 34 covering the insertion port section 40 from the above and attached to the handlebar 15, the handlebar cover 34 includes a storage section 61 opening upward with the portable information terminal S being stored therein.

## Description

### Technical Field

The present invention relates to a storage structure of a portable information terminal for a saddle-ride type vehicle including a handlebar cover.

### Background Art

In related arts, in a storage structure of a portable information terminal for a vehicle, a structure is known in which such a portable information communication terminal as represented by a smart phone is utilized as an indicator of meters and the like and an interface for two-way communication by fixing it to a terminal support section that is set beforehand in a vehicle (refer to DE 10 2009 033 186 for example).

### Summary of Invention

### Technical Problems

Meanwhile, in the storage structure of the portable information terminal of the related arts described above, the terminal support section supporting the portable information terminal is arranged by the side of a meter, however, in the case of a small vehicle such as a saddle-ride type vehicle, because the space is comparatively limited in the periphery of the meter, the portable information terminal cannot be arranged next to the meter most of the time, and it is desirous that the portable information terminal can be arranged in the periphery of the meter.

The present invention has been developed in view of the circumstances described above, and its object is to allow the portable information terminal to be arranged in the periphery of the meter in a storage structure of a portable information terminal for a saddle-ride vehicle.

### Solution to Problem

In order to achieve the object, the present invention is a storage structure of a portable information terminal for a saddle-ride type vehicle including a head pipe (11), a front cover (36) that covers the head pipe (11), a meter panel (22) formed on the upper face of the front cover (36) with a meter (31) being disposed thereon, a handlebar shaft (14) journaled to the head pipe (11), a handlebar (15) attached to the upper end of the handlebar shaft (14) through an insertion port section (40) arranged in the meter panel (22), and a handlebar cover (34) covering the insertion port section (40) from the above and attached to the handlebar (15), in which the handlebar cover (34) includes a storage section (61) opening upward with a portable information terminal (S) being stored therein.

According to the present invention, because the portable information terminal can be stored utilizing a space of the storage section of the handlebar cover, compared with a configuration storing the portable information terminal right next to the meter, restriction of the space on the meter panel side is less. Accordingly, the portable information terminal can be disposed in the periphery of the meter.

Also, the present invention is characterized in that the handlebar (15) includes a center section (15A) connected to the handlebar shaft (14), rising sections (15B) rising upward to the rear from the center section (15A), and holding sections (15C) extending in the vehicle width direction from the upper end of the rising section (15B) and held by a rider, and the storage section (61) is arranged in a portion (43) covering the center section (15A).

According to the present invention, because the storage section is arranged in the portion covering the center section, the portable information terminal can be disposed so as to be distracted from the eyes of the rider to the front side of the holding sections, the line of sight is easily shifted to the portable information terminal from the state of viewing forward, and the portable information terminal is easily viewed. Also, because the portable information terminal can be disposed in the vicinity of the meter, the shifting amount of the line of sight in viewing the meter and the portable information terminal can be reduced, and the visibility of the portable information terminal is excellent.

Also, the present invention is characterized in that an opening section (62) of the storage section (61) is covered by an openable/closable transparent lid (63).

According to the present invention, because the opening section of the storage section is covered by the openable/closable transparent lid, the state of the portable information terminal can be viewed from the outside via the transparent lid, and the portable information terminal can be protected against the dust and the like.

Also, the present invention is characterized in that the transparent lid (63) is tightly adhered to the edge of the opening section (62) of the storage section (61) by a seal (70), and a communication port (75) that communicates with the inside of the handlebar cover (34) are arranged in the storage section (61).

According to the present invention, because the transparent lid is tightly adhered to the edge of the opening section of the storage section by the seal and the communication port that communicates with the inside of the handlebar cover are arranged in the storage section, variation of the air pressure inside the storage section can be suppressed by the seal, and the heat inside the storage section can be radiated by the air flowing between the inside of the handlebar cover and the storage section via the communication port.

Also, the present invention is characterized in that an air introduction port (20A) taking travelling air into the front cover (36) is arranged in the front cover (36) at a position lower than the insertion port section (40), the handlebar cover (34) opens toward the insertion port section (40) and includes an air exhaust port (44A, 54) at a position of the same height to that of the storage section (61) or higher than the storage section (61), and the travelling air taken into the front cover (36) is taken into the handlebar cover (34) through the insertion port section (40), and is thereafter released to the outside through the air exhaust port (44A, 54).

According to the present invention, because the travelling air taken into the inside of the front cover is taken into the inside of the handlebar cover through the insertion port section and is thereafter released to the outside through the air exhaust port, the travelling air can be made flow in the periphery of the storage section, and heat radiation of the portable information terminal can be promoted by the travelling air.

Also, the present invention is characterized in that a second air introduction port (53) opens to a front face (49) of the handlebar cover (34) at positions of the same height to that of the storage section (61) or lower than the storage section (61).

According to the present invention, the travelling air introduced through the second air introduction port can be made flow in the periphery of the storage section, and heat radiation of the portable information terminal can be further promoted.

Also, the present invention is characterized in that a charging coil (76) for non-contact charging the portable information terminal (S) is incorporated in a bottom face section (61B) of the storage section (61).

According to the present invention, by storing the portable information terminal in the storage section, the portable information terminal can be charged easily by non-contact charging.

### Advantageous Effects of Invention

According to the storage structure of a portable information terminal for a saddle-ride type vehicle in relation with the present invention, compared with the configuration storing the portable information terminal right next to the meter, restriction of the space on the meter panel side is less, and the portable information terminal can be disposed in the periphery of the meter.

Also, the portable information terminal can be disposed so as to be distracted from the eyes of the rider to the front side of the holding sections, the line of sight is easily shifted to the portable information terminal from the state of viewing forward, and the portable information terminal is easily viewed. Further, the shifting amount of the line of sight in viewing the meter and the portable information terminal can be reduced, and the visibility of the portable information terminal is excellent.

Furthermore, the state of the portable information terminal can be viewed from the outside via the transparent lid, and the portable information terminal can be protected against the dust and the like.

Moreover, variation of the air pressure inside the storage section can be suppressed by the seal, and the heat inside the storage section can be radiated by the air flowing between the inside of the handlebar cover and the storage section via the communication port.

Additionally, the travelling air can be made flow to the periphery of the storage section, and heat radiation of the portable information terminal can be promoted by the travelling air.

Also, the travelling air introduced through the second air introduction port can be made flow to the periphery of the storage section, and heat radiation of the portable information terminal can be further promoted.

In addition, by storing the portable information terminal in the storage section, the portable information terminal can be charged easily by non-contact charging.

### Brief Description of Drawings

Fig. 1 is a left side view of a motorcycle in relation with an embodiment of the present invention.
Fig. 2 is a drawing as viewed along an arrow Z of Fig. 1.
Fig. 3 is a drawing of a handlebar as viewed from the rear.
Fig. 4 is a cross-sectional view taken along a line IV-IV of Fig. 3.
Fig. 5 is an enlarged view of a part of Fig. 4.
Fig. 6 is a drawing of a portable information terminal attaching section as viewed along an arrow Z.
Fig. 7 is a cross-sectional view taken along a line VII-VII of Fig. 6.
Fig. 8 is a cross-sectional view taken along a line VIII-VIII of Fig. 6.

### Description of Embodiment

Below, a motorcycle in relation with the embodiment of the present invention will be described referring to the drawings. Also, in the explanation, descriptions of directions such as front and back, right and left, and up and down are same to the directions with respect to the vehicle body unless there is any description otherwise in particular. Further, a mark FR shown in respective drawings shows forward of the vehicle body, a mark UP shows upward of the vehicle body, and a mark LE shows left hand of the vehicle body.

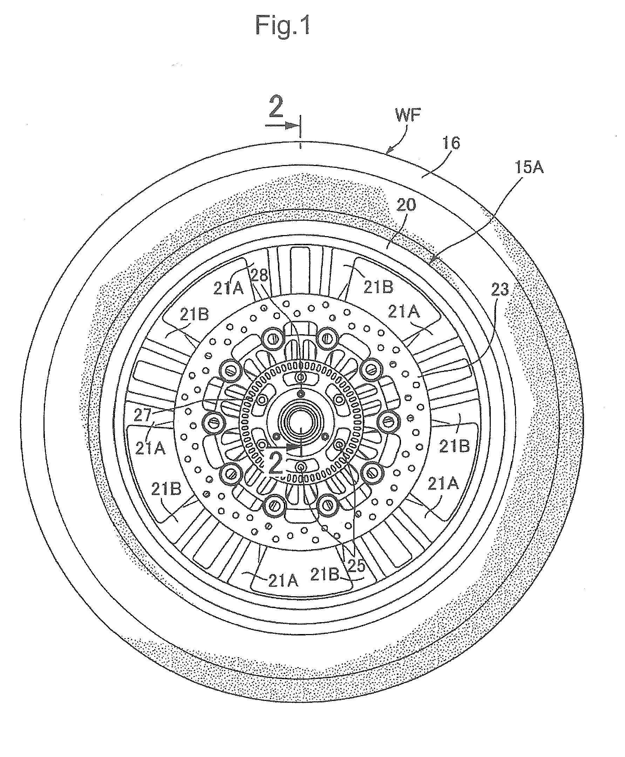

Fig. 1 is a left side view of a motorcycle in relation with an embodiment of the present invention.

A motorcycle 1 (saddle-ride type vehicle) is a scooter type vehicle including a low-slung step floor 24A on which a rider sitting on a seat 10 places the feet and includes a front wheel 2 in front of a body frame F, and a rear wheel 3 that is a driving wheel is journaled to a unit swing engine U (unit swing power unit) connected to the rear part of the body frame F. The body frame F is covered by a vehicle body cover C made of a resin.

The body frame F includes a head pipe 11 arranged in the front part, a down tube 12 extending downward to the rear from the head pipe 11, and a seat rail (not shown) extending in the front/back direction below the seat 10, and the like.

A steering system 13 steering the front wheel 2 includes a steering shaft 14 (handlebar shaft) rotatably journaled to the head pipe 11, a handlebar 15 connected to the upper part of the steering shaft 14, and a right and left pair of front forks 16 connected to the lower end of the steering shaft 14. The front wheel 2 is journaled to the lower end of the front forks 16, and is steered by operation by the handlebar 15.

The unit swing engine U is of a unit swing type in which an engine E and a transmission case M accommodating a belt type continuously variable transmission (not shown) are integrated, and has also a function as a swing arm supporting the rear wheel 3.

The seat 10 extends from the center part to the rear part in the front/back direction of the motorcycle 1, and includes a front seat 10A on which the rider sits and a rear seat 10B which is formed higher than the front seat 10A by one step and on which a pillion passenger sits. Below the seat 10, a storage box (not shown) whose upper face is blocked by the seat 10 is arranged.

The vehicle body cover C includes a front face cover 20 covering the front and the right and left lateral sides of the steering system 13, an upper inner cover 21 connected to the right and left edges of the front face cover 20 and covering the head pipe 11 from the rear, a meter panel 22 connected to the upper parts of the front face cover 20 and the upper inner cover 21 below the handlebar 15, a lower inner cover 23 connected to the lower part of the upper inner cover 21, a step cover 24 including the step floor 24A, a floor skirt 25 covering the lower part of the step cover 24, and a body side cover 26 covering the storage box and the seat rail from the lateral side below the seat 10.

The front face cover 20, the upper inner cover 21 and the meter panel 22 constitute a front cover section 36 (front cover) that covers the head pipe 11 from the entire periphery of the lateral side and the above. In a front inner space K defined by the front cover section 36, a unit of a lighting device group and components such as wiring and the like are disposed.

The upper inner cover 21 and the lower inner cover 23 constitute a leg shield 30 extending in the vertical direction forward of the legs of the rider sitting on the front seat 10A.

The handlebar 15 is covered by a handlebar cover 34.

In the upper part of the front face of the front face cover 20, a wind screen 27 extending so as to incline upward to the rear is arranged. At the front end of the front face cover 20, a head light 28 is arranged. In the front forks 16, a front fender 29 covering the front wheel 2 from the above is arranged.

In the lower part of the front face cover 20 positioned above the front fender 29, an air introduction port 20A through which the steering system 13 passes is formed, the steering system 13 rotates to the right and left in a space inside the air introduction port 20A, and the travelling air passes through the air introduction port 20A and is introduced into the front inner space K.

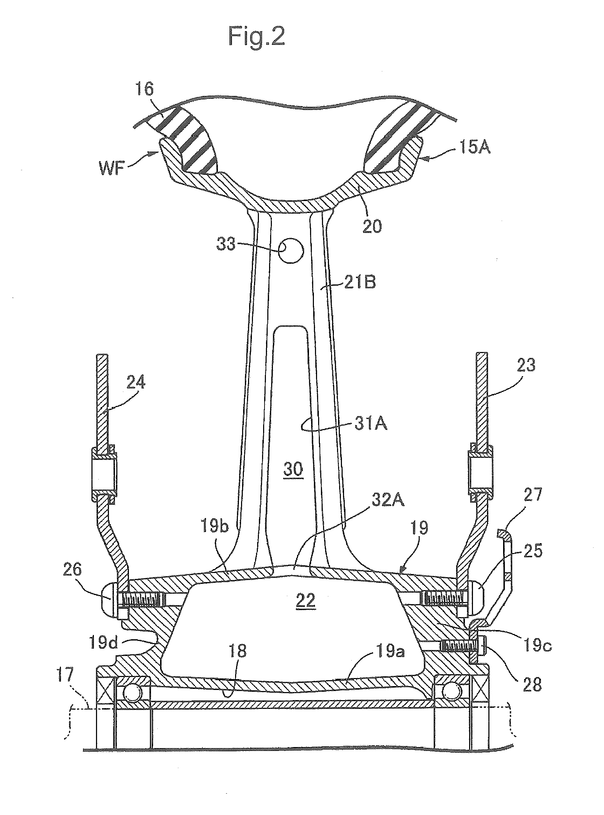

Fig. 2 is a drawing as viewed along an arrow Z of Fig. 1. Here, the direction of viewing along the arrow Z is the direction of the line of sight when the rider sitting on the front seat 10A visually views a meter unit 31 (meter).

As shown in Fig. 1 and Fig. 2, the meter panel 22 is arranged so as to incline downward to the rear so that the upper face thereof generally opposes the face of the rider sitting on the front seat 10A. Above the rear part of the meter panel 22, the handlebar 15 is arranged.

In the front part of the meter panel 22 and forward of the handlebar 15, the meter unit 31 displaying the speed and the like of the motorcycle 1 is disposed integrally with the meter panel 22 so as to be embedded in the meter panel 22. The meter unit 31 includes a speed meter 32 displaying the speed of the motorcycle 1 and a tachometer 33 displaying the rotational speed of the engine E. The speed meter 32 is disposed on one side (left side) with respect to the centerline L in the vehicle width direction, and the tachometer 33 is disposed on the other side (right side) with respect to the centerline L.

The wind screen 27 is disposed forward of the meter unit 31, and is arranged so as to incline upward to the rear so as to reduce the resistance of the travelling air. Backward of the wind screen 27 and forward of the meter unit 31, a meter visor 35 covering the meter unit 31 from the front upper part is arranged. The meter visor 35 is disposed incliningly so as to be directed upward to the rear along the inclination of the wind screen 27, and the upper part thereof covers the meter unit 31 from the above. The sunlight, rain water and the like from the above are prevented from directly hitting the meter unit 31 by the meter visor 35, and the visibility of the meter unit 31 is secured.

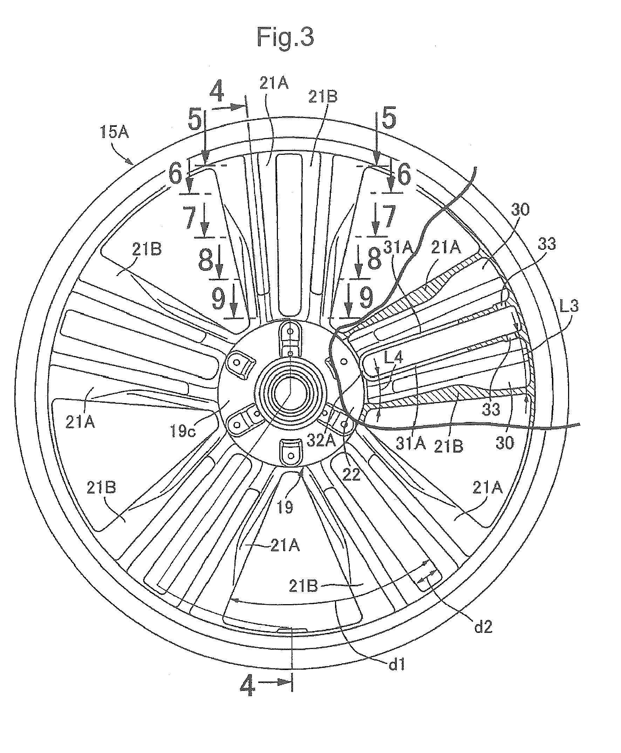

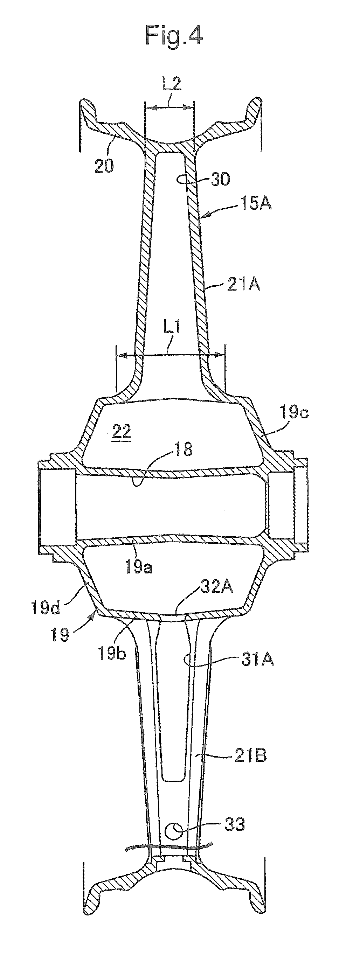

Fig. 3 is a drawing of the handlebar 15 as viewed from the rear. Fig. 4 is a cross-sectional view taken along a line IV-IV of Fig. 3.

As shown in Fig. 2 to Fig. 4, in the center in the vehicle width direction in the rear part of the meter panel 22, an insertion port section 40 communicating with the inside of the front cover section 36 is formed, and the steering shaft 14 passes through the insertion port section 40 and projects upward of the meter panel 22 from the front inner space K. At the upper end of the steering shaft 14, a handlebar post 41 to which the handlebar 15 is connected is arranged.

The handlebar 15 is formed by bending one pipe, and includes a handlebar center section 15A (center section) extending in the vehicle width direction, fixed to the handlebar post 41 and positioned in the center in the vehicle width direction, rising sections 15B, 15B rising upward to the rear from both right and left ends of the handlebar center section 15A, and holding sections 15C, 15C extending outward in the vehicle width direction from the upper ends of the rising sections 15B, 15B and held by the rider.

The handlebar post 41 is of a split and fastening type sandwiching the handlebar center section 15A in the vertical direction, and includes a lower half section 41 A arranged at the upper end of the steering shaft 14 and an upper half section 41C of a sheet shape connected to the upper surface of the lower half section 41A by bolts 41B inserted from the above.

The handlebar cover 34 extends in the vehicle width direction along the shape of the handlebar 15, and includes a center section cover section 43 covering the handlebar center section 15A and rising section cover sections 44, 44 rising from the right and left lateral sides of the center section cover section 43 and covering a part of the rising sections 15B, 15B and the holding sections 15C, 15C. Also, the handlebar cover 34 is halved into two of a front and a back, includes a front handlebar cover 45 covering the handlebar 15 from the front and a rear handlebar cover 46 covering the handlebar 15 from the rear, and is formed so as to integrally combine the front handlebar cover 45 and the rear handlebar cover 46 by a mating face 47 that lines the handlebar 15.

The handlebar cover 34 surrounds the entire periphery of the handlebar 15 in the rising section cover sections 44, 44. In the rear faces of the rising section cover sections 44, 44, upper air exhaust ports 44A making the spaces inside the rising section cover sections 44, 44 communicate with the outside are arranged respectively.

The center section cover section 43 is formed into a shape of a box whose lower face opens, and includes an upper wall section 48 covering the handlebar center section 15A from the above, a front wall section 49 (front face) extending downward from the front edge of the upper wall section 48 and covering the handlebar center section 15A from the front, a rear wall section 50 extending downward from the rear edge of the upper wall section 48 and covering the handlebar center section 15A from the rear, side wall sections 51, 51 extending downward from the right and left edges of the upper wall section 48, and a lower face opening section 52 communicating with the insertion port section 40 of the meter panel 22.

The center section cover section 43 is formed larger than the insertion port section 40 of the meter panel 22 in the front/back and right/left directions, and covers the insertion port section 40 from the above along with the handlebar center section 15A. An inner space H of the handlebar cover 34 communicates with the front inner space K of the front cover section 36 via the insertion port section 40.

At the right and left lateral side edges of the front wall section 49 of the center section cover section 43, second air introduction ports 53, 53 making the inner space H communicate with the outside are formed. The second air introduction ports 53, 53 are elongated holes extending in the vertical direction and are formed in the front handlebar cover 45.

At the right and left lateral side edges of the rear wall section 50 of the center section cover section 43, air exhaust ports 54, 54 making the inner space H communicate with the outside are formed. The air exhaust ports 54, 54 are elongated holes extending in the vertical direction on the outside in the vehicle width direction of the second air introduction ports 53, 53 and are formed in the rear handlebar cover 46.

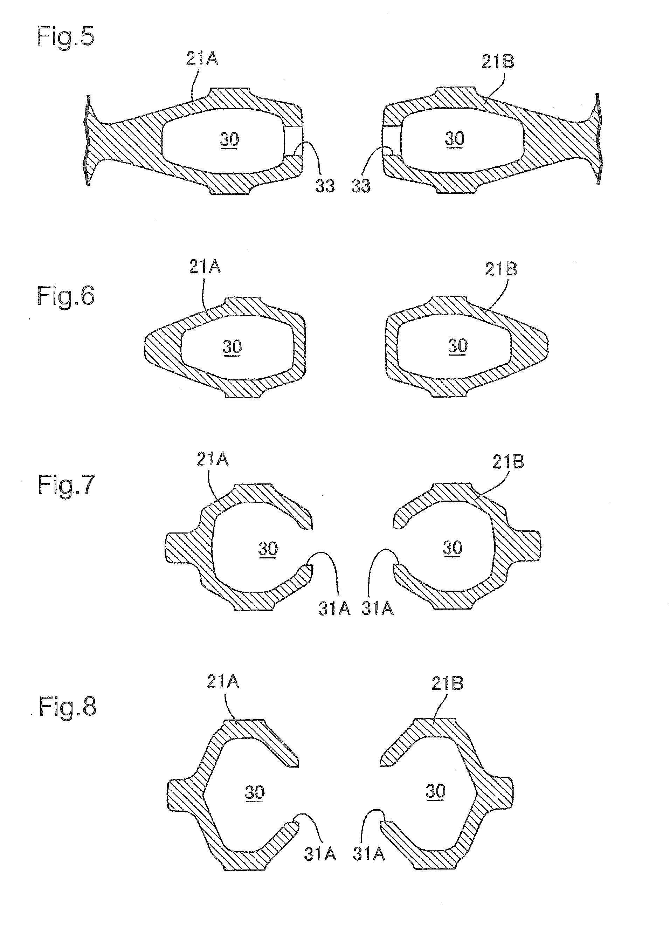

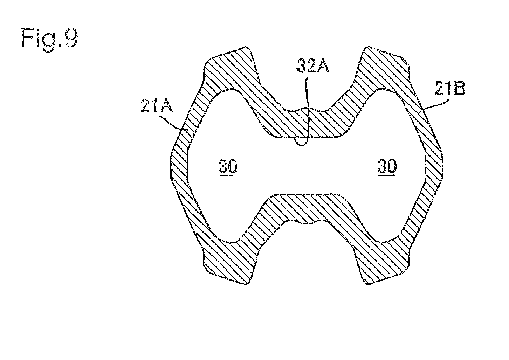

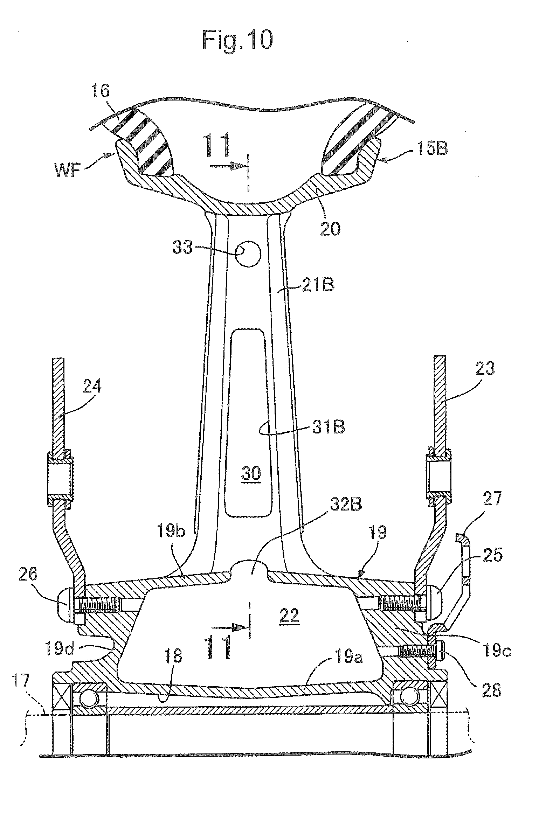

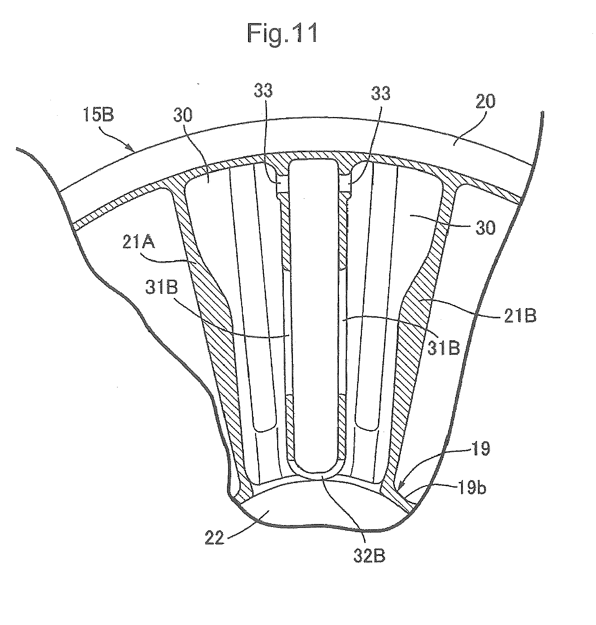

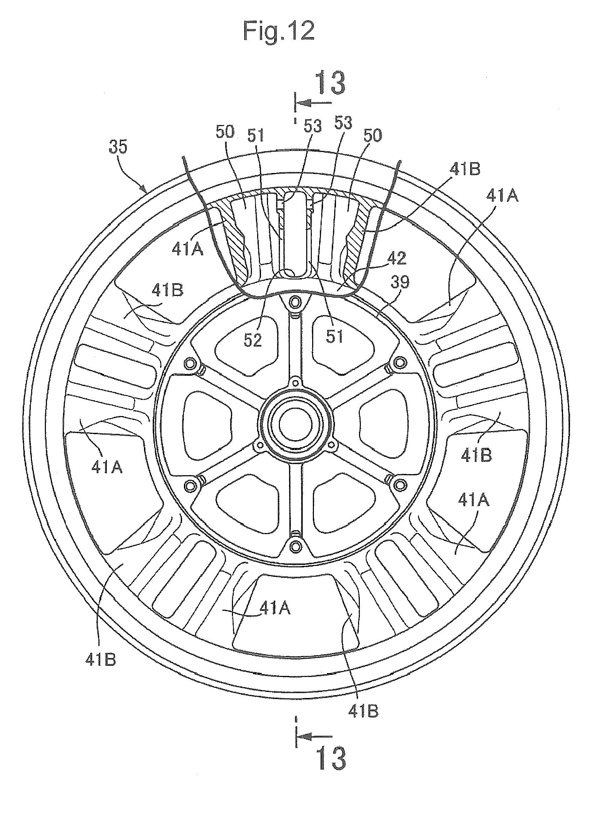

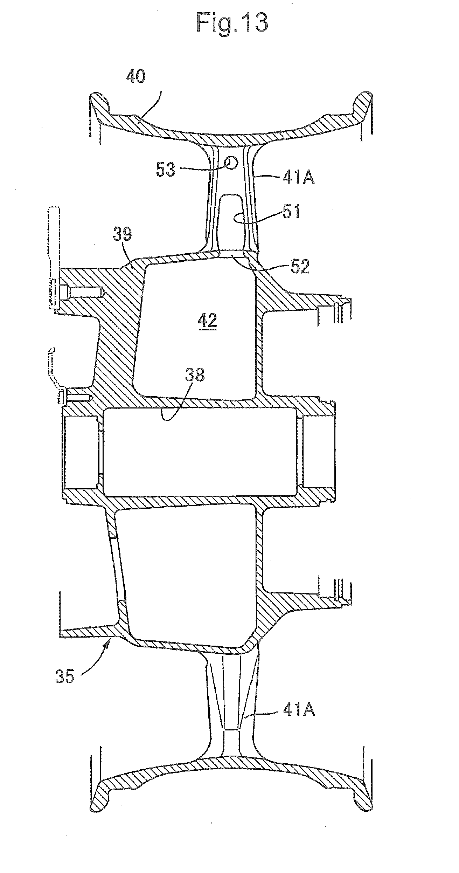

Fig. 5 is an enlarged view of a part of Fig. 4.

As shown in Fig. 4 and Fig. 5, in the upper wall section 48 of the center section cover section 43 of the handlebar cover 34, a portable information terminal attaching section 60 to which a portable information terminal S of a sheet shape can be attached is arranged. Here, the portable information terminal S is a cellular phone, a smart phone, or portable electronic equipment such as a portable navigation system, PDA (Personal Digital Assistants) and the like.

The portable information terminal attaching section 60 includes a storage section 61 which is formed so that the upper wall section 48 is recessed to the inner space H side and to which the portable information terminal S is stored, an opening section 62 of the upper face of the storage section 61, a transparent lid 63 openably/closably blocking the opening section 62 from the outer side, and a non-contact charging unit 64 arranged in the inner space H and capable of charging the portable information terminal S in a non-contact state.

The storage section 61 is formed into a generally rectangular shape long in the front/back direction in a plan view so as to be capable of storing the portable information terminal S of a generally rectangular shape, and includes a wall section 61A of a frame shape extending from the upper face of the upper wall section 48 to the inside of the inner space H, and a bottom wall section 61B (bottom face section) extending parallel to the upper face of the upper wall section 48 from the lower end of the wall section 61A. In the storage section 61, the entire upper face is the opening section 62, and the portable information terminal S is taken in and out to and from the storage section 61 through the opening section 62. The storage section 61 is a recess whose upper wall section 48 is recessed. The depth of the storage section 61 is formed into such a depth that the portable information terminal S is fit into the storage section 61 in a state the lower surface of the portable information terminal S is made abut on the bottom wall section 61B. The portable information terminal S is stored in a posture inclining backward so that a display screen S1 of the upper surface generally opposes the face of the rider.

In the center part of the bottom wall section 61B, an opening 65 of a generally rectangular shape making the storage section 61 communicate with the inner space H side is formed. In the peripheral edge part of the opening 65, a rib 66 of a frame shape extending to the inner space H side is formed.

On the bottom wall section 61B of the storage section 61, a projection for seal 67 disposed in a frame shape so as to line the peripheral edge part of the opening section 62 is erected, and the portable information terminal S is stored inside the projection for seal 67 in the storage section 61.

The transparent lid 63 is a lid of a sheet shape formed of a resin material having the light transmissivity, and is formed into a generally rectangular shape to suit the storage section 61. The transparent lid 63 includes a hinge section 68 that includes a rotary shaft extending in the vehicle width direction at the upper edge thereof, and is rotatably connected to the upper edge part of the storage section 61 by the hinge section 68. In the inner side face of the outer edge part of the transparent lid 63, a groove 69 is formed at a position corresponding to the projection for seal 67, and a seal member 70 (seal) of rubber and the like is arranged in the groove 69. When the transparent lid 63 is closed, the seal member 70 tightly adheres to the projection for seal 67, and the transparent lid 63 tightly closes the storage section 61. The closed state of the transparent lid 63 is maintained by a lock mechanism not shown. Also, in the vicinity of the seal member 70 in the inner side face of the transparent lid 63, support members 71 made of rubber abutting on the upper surface of the portable information terminal S are arranged.

Fig. 6 is a drawing of the portable information terminal attaching section 60 as viewed along an arrow Z. Fig. 7 is a cross-sectional view taken along a line VII-VII of Fig. 6. Fig. 8 is a cross-sectional view taken along a line VIII-VIII of Fig. 6. In Fig. 6, the state the transparent lid 63 is opened is shown in the left side, and the closed state is shown in the right side. Also, in Fig. 8, the state the transparent lid 63 is opened is shown.

As shown in Fig. 6 to Fig. 8, inside the storage section 61, plate springs 72, 72 extending along the right and left wall sections 61A of the storage section 61 are arranged. Each plate spring 72 includes a pair of support sections 72A, 72A obtained by bending a part of a plate material and bulging it in the thickness direction, a center side base section 72B formed between the support sections 72A, 72A, and base sections 72C, 72C formed at both ends. The center side base section 72B and the base sections 72C, 72C are flat portions not bent.

The each plate spring 72 is disposed in the direction the support sections 72A, 72A bulge to the portable information terminal S side, and supports the portable information terminal S by sandwiching the right and left side face sections of the portable information terminal S by elasticity thereof. More specifically, in the distal ends of the support sections 72A, 72A, support members 73 made of rubber abutting on the side face sections of the portable information terminal S are arranged. The support member 73 has a step section 73A (Fig. 8) recessed outward in the inner face section abutting on the side face section of the portable information terminal S, and the portable information terminal S is supported effectively by fitting the side face section to the step section 73A.

In the bottom wall section 61B of the storage section 61, at positions corresponding to the center side base section 72B and the base sections 72C, 72C, restricting wall sections 74 opposing the base sections 72B, 72C, 72C are arranged, and the bulging amount of the each plate spring 72 to the portable information terminal S side is restricted by the restricting wall sections 74.

Also, in the vicinity of the center side base section 72B in the bottom wall section 61B, communication ports 75, 75 making the storage section 61 communicate with the inner space H are formed.

As shown in Fig. 4 to Fig. 8, the non-contact charging unit 64 includes a primary coil section 76 (charging coil) capable of charging in the non-contact manner, a holder 77 supporting the primary coil section 76, and a case 78 supporting the holder 77.

The portable information terminal S includes a secondary coil (not shown) in the non-contact type charging system. When the portable information terminal S is stored in the storage section 61, electric power supplied from a battery (not shown) of the vehicle to the primary coil section 76 is transmitted to the secondary coil in the non-contact manner, and the portable information terminal S is charged.

The case 78 is formed into a box shape whose upper face opens, and is arranged so as to block the opening 65 of the bottom wall section 61B of the storage section 61 from the inner space H side. The case 78 includes a bottom wall 79 opposing the opening 65, a side wall 80 erected in a frame shape from the outer edge of the bottom wall 79, a flange section 81 projecting outward from the upper end of the side wall 80, and plural spring support shafts 82 erected on the bottom wall 79. The case 78 is fixed by that the flange section 81 is fastened by screws 83 to plural boss sections 43A arranged on the rear surface of the upper wall section 48 of the center section cover section 43. In the side wall 80 of the case 78, ventilation ports 84 making the space inside the case 78 communicate with the inner space H are formed.

The holder 77 is formed into a box shape that fits to the opening 65 of the bottom wall section 61B. The holder 77 is energized so as to press the portable information terminal S upward from beneath by coil springs 85 that are supported by the spring support shafts 82 of the case 78. In the side face section of the holder 77, an abutting section 77A protruding outward is arranged, and the position of the holder 77 in the vertical direction is restricted by abutment of the abutting section 77A on the rib 66.

The primary coil section 76 is fixed to the upper part of the holder 77, is arranged over the entire upper surface of the holder 77, and is pressed to the lower surface of the portable information terminal S by the energizing force of the coil springs 85. More specifically, the portable information terminal S is supported not only by the support members 73 but also by being sandwiched by the support member 71 of the transparent lid 63 and the primary coil section 76.

When the portable information terminal S is to be stored in the portable information terminal attaching section 60, the rider on the seat 10 can store the portable information terminal S easily by opening the transparent lid 63 arranged in the center section cover section 43 in the vicinity of just in front of the rider and setting the portable information terminal S to the storage section 61 exposed upward. According to the present embodiment, because the portable information terminal S is stored in the storage section 61 of the handlebar cover 34 positioned backward and upward of the meter unit 31, the portable information terminal S can be disposed in the periphery of the meter unit 31 without affecting the space on the meter unit 31 side and without blocking the meter unit 31 by the portable information terminal S. Thus, by storing the portable information terminal S in the storage section 61 in the periphery of the meter unit 31, the portable information terminal S also can be viewed only by slightly shifting the line of sight from the meter unit 31, and the visibility of the portable information terminal S is excellent. Also, the portable information terminal S can be charged by the non-contact charging unit 64 only by storing the portable information terminal S in the storage section 61, the effort of connecting the charging cord and the like is not required, and therefore charging is easy.

Further, because the storage section 61 is arranged in the center section cover section 43 forward of the holding sections 15C, 15C of the handlebar 15, the rider can view the portable information terminal S only by slightly shifting the line of sight to the meter unit 31 side (the direction of viewing along the arrow Z of Fig. 2) from the state viewing forward, and the visibility is excellent.

Furthermore, because the storage section 61 is covered by the transparent lid 63, the visibility of the portable information terminal S can be secured while protecting the portable information terminal S against the dust and the like.

Moreover, because the rising sections 15B, 15B rise upward at the sides of the storage section 61, contents of the information of the display screen S1 of the portable information terminal S is not viewed from the side by others, the shadow is easily formed against the sunlight from the lateral sides by the rising sections 15B, 15B, and the display screen S1 is viewed easily.

Travelling air W1 having ascended inside the front inner space K of the front cover section 36 and having flown to the insertion port section 40 of the meter panel 22 as shown in Fig. 4 out of the travelling air having been introduced to the front inner space K from the air introduction port 20A (Fig. 1) accompanying travel of the motorcycle 1 flows from the lower face opening section 52 of the handlebar cover 34 to the inner space H. Further, travelling air W2 is introduced into the inner space H also from the second air introduction ports 53, 53 of the front wall section 49 of the center section cover section 43. Furthermore, the travelling air W1, W2 having been introduced into the inner space H flows into the case 78 through the ventilation port 84 of the case 78, are taken in and out to and from the inside of the storage section 61 through the communication ports 75, 75 (Fig. 7) of the bottom wall section 61B of the storage section 61, and are eventually released to the outside through the air exhaust ports 54, 54 of the center section cover section 43 and the upper air exhaust port 44A. Because the air pressure of the part backward of the handlebar cover 34 becomes negative pressure due to the effect of the travelling air flowing along the wind screen 27 and the like, the travelling air W1, W2 is easily discharged through the air exhaust ports 54, 54 and the upper air exhaust port 44A. Thus, because heat radiation of the portable information terminal S and the non-contact charging unit 64 can be promoted by the travelling air W1, W2, temperature rise of the portable information terminal S and the non-contact charging unit 64 can be suppressed effectively.

Because the air exhaust ports 54, 54 are arranged at the height generally same to that of the storage section 61, the air ascending due to heat radiation from the portable information terminal S and the non-contact charging unit 64 can be efficiently discharged to the outside. Also, because the upper air exhaust port 44A is arranged at a position higher than the storage section 61, the air ascending due to the heat radiation from the portable information terminal S and the non-contact charging unit 64 can be efficiently discharged to the outside.

Further, because the second air introduction ports 53, 53 are arranged at the height generally same to that of the storage section 61, the travelling air W2 can be efficiently supplied to the storage section 61 side, and temperature rise can be effectively suppressed.

As described above, according to the embodiment to which the present invention is applied, the handlebar 15 is attached to the upper end of the steering shaft 14 through the insertion port section 40 arranged in the meter panel 22, the handlebar cover 34 attached to the handlebar 15 includes the storage section 61 that opens upward and to which the portable information terminal S is stored, the portable information terminal S can be stored utilizing the space of the storage section 61 of the handlebar cover 34, therefore, compared to the configuration in which the portable information terminal S is stored right next to the meter unit 31 by the terminal support section and the like, restriction of the space of the meter panel 22 side is diminished. Therefore, the portable information terminal S can be disposed in the periphery of the meter unit 31.

Also, the handlebar 15 includes the handlebar center section 15A connected to the steering shaft 14, the rising sections 15B, 15B rising upward to the rear from the handlebar center section 15A, and the holding sections 15C, 15C extending in the vehicle width direction from the upper ends of the rising sections 15B, 15B and held by the rider, the storage section 61 is arranged in a portion that covers the handlebar center section 15A, therefore the portable information terminals can be disposed so as to be distracted from the eyes of the rider to the front side of the holding sections 15C, 15C, the line of sight is easily shifted to the portable information terminal S from the state of viewing forward, and the portable information terminal S is easily viewed. Further, because the portable information terminal S can be disposed in the vicinity of the meter unit 31, the shifting amount of the line of sight in viewing the meter unit 31 and the portable information terminal S can be reduced, and the visibility of the portable information terminal S is excellent.

Furthermore, because the opening section 62 of the storage section 61 is covered by the openable/closable transparent lid 63, the state of the portable information terminal S can be viewed from the outside via the transparent lid 63, and the portable information terminal S can be protected against the dust and the like.

Moreover, because the transparent lid 63 is tightly adhered to the projection for seal 67 of the edge of the opening section 62 of the storage section 61 by the seal member 70 and the communication ports 75, 75 that communicate with the inner space H of the handlebar cover 34 are arranged in the storage section 61, variation of the air pressure inside the inner space H can be suppressed by the seal member 70, and the heat inside the storage section 61 can be radiated by the air flowing between the inner space H of the handlebar cover 34 and the storage section 61 via the communication ports 75, 75.

Additionally, the air introduction port 20A taking the travelling air into the front inner space K of the front cover section 36 is arranged in the front cover section 36 at a position lower than the insertion port section 40, the handlebar cover 34 opens toward the insertion port section 40, includes the air exhaust ports 54, 54 at a height generally same to that of the storage section 61, and includes the upper air exhaust port 44A at a position higher than the storage section 61, and the travelling air taken into the front inner space K is taken into the handlebar cover 34 through the insertion port section 40 and is thereafter released to the outside through the air exhaust ports 54, 54 and the upper air exhaust port 44A, therefore the travelling air can be made flow in the periphery of the storage section 61, and heat radiation of the portable information terminal S can be promoted by the travelling air.

Also, because the second air introduction ports 53, 53 open to the front wall section 49 of the handlebar cover 34 at the positions of the generally same height to that of the storage section 61, the travelling air W2 introduced through the second air introduction ports 53, 53 can be made flow in the periphery of the storage section 61, and heat radiation of the portable information terminal S can be further promoted.

Further, because the primary coil section 76 for non-contact charging the portable information terminal S is incorporated in the opening 65 of the bottom wall section 61B of the storage section 61, by storing the portable information terminal S in the storage section 61, the portable information terminal S can be charged easily.

Furthermore, the embodiment described above shows an aspect to which the present invention is applied, and the present invention is not to be limited to the embodiment described above.

In the present embodiment, although it was described that the second air introduction ports 53, 53 opened to the front wall section 49 of the handlebar cover 34 at the positions generally same height to that of the storage section 61, the present invention is not limited to it, and the second air introduction ports may also be arranged in the positions lower than the storage section 61 in the front wall section 49.

Moreover, in the present embodiment, although it was described that the air exhaust ports 54, 54 and the upper air exhaust ports 44A, 44A were arranged, the present invention is not limited to it, and it may be configured to arrange any of the air exhaust ports 54, 54 or the upper air exhaust port 44A as the air exhaust port.

Additionally, in the present embodiment, although the portable information terminal attaching section 60 arranged in a motorcycle was described, the present invention is not limited to it, and the present invention may also be applied to a saddle-ride type vehicle of three-wheeled or with the number of wheels exceeding four.

It is the object of the invention to dispose a portable information terminal in the periphery of a meter in a storage structure of a portable information terminal for a saddle-ride type vehicle.

In a storage structure of a portable information terminal for a saddle-ride type vehicle including a head pipe, a front cover that covers the head pipe, a meter panel 22 formed on the upper face of the front cover with the meter being disposed thereon, a steering shaft 14 journaled to the head pipe, a handlebar 15 attached to the upper end of the steering shaft 14 through an insertion port section 40 arranged in the meter panel 22, and a handlebar cover 34 covering the insertion port section 40 from the above and attached to the handlebar 15, the handlebar cover 34 includes a storage section 61 opening upward with the portable information terminal S being stored therein.

## Claims

1. A storage structure of a portable information terminal for a saddle-ride type vehicle, comprising:
a head pipe (11);
a front cover (36) that covers the head pipe (11);
a meter panel (22) formed on the upper face of the front cover (36) with a meter (31) being disposed thereon;
a handlebar shaft (14) journaled to the head pipe (11);
a handlebar (15) attached to the upper end of the handlebar shaft (14) through an insertion port section (40) arranged in the meter panel (22); and
a handlebar cover (34) covering the insertion port section (40) from the above and attached to the handlebar (15),
wherein the handlebar cover (34) includes a storage section (61) opening upward with a portable information terminal (S) being stored therein.

2. The storage structure of a portable information terminal for a saddle-ride type vehicle according to claim 1, wherein
the handlebar (15) includes a center section (15A) connected to the handlebar shaft (14), rising sections (15B) rising upward to the rear from the center section (15A), and holding sections (15C) extending in the vehicle width direction from the upper end of the rising section (15B) and held by a rider, and
the storage section (61) is arranged in a portion (43) covering the center section (15A).

3. The storage structure of a portable information terminal for a saddle-ride type vehicle according to claim 1 or 2, wherein
an opening section (62) of the storage section (61) is covered by an openable/closable transparent lid (63).

4. The storage structure of a portable information terminal for a saddle-ride type vehicle according to claim 3, wherein
the transparent lid (63) is tightly adhered to the edge of the opening section (62) of the storage section (61) by a seal (70), and
a communication port (75) that communicates with the inside of the handlebar cover (34) is arranged in the storage section (61).

5. The storage structure of a portable information terminal for a saddle-ride type vehicle according to claim 3 or 4, wherein
an air introduction port (20A) taking travelling air into the front cover (36) is arranged in the front cover (36) at a position lower than the insertion port section (40),
the handlebar cover (34) opens toward the insertion port section (40) and includes an air exhaust port (44A, 54) at a position of the same height to that of the storage section (61) or higher than the storage section (61), and
the travelling air taken into the front cover (36) is taken into the handlebar cover (34) through the insertion port section (40), and is thereafter released to the outside through the air exhaust port (44A, 54).

6. The storage structure of a portable information terminal for a saddle-ride type vehicle according to claim 5, wherein
a second air introduction port (53) opens to a front face (49) of the handlebar cover (34) at positions of the same height to that of the storage section (61) or lower than the storage section (61).

7. The storage structure of a portable information terminal for a saddle-ride type vehicle according to any one of claims 1 to 6, wherein
a charging coil (76) for non-contact charging the portable information terminal (S) is incorporated in a bottom face section (61B) of the storage section (61).
